Europäisches Patentamt

European Patent Office

Office européen des brevets

(19)

(11) Veröffentlichungsnummer: **0 314 731 B1**

(12) **EUROPÄISCHE PATENTSCHRIFT**

(45) Veröffentlichungstag der Patentschrift: **03.02.93**

(51) Int. Cl.5: **B01F 3/02**, B01F 15/04

(21) Anmeldenummer: **88904205.7**

(22) Anmeldetag: **13.05.88**

(86) Internationale Anmeldenummer:
**PCT/DE88/00282**

(87) Internationale Veröffentlichungsnummer:
**WO 88/08743 (17.11.88 88/25)**

(54) **EINRICHTUNG FÜR DIE HERSTELLUNG BESTIMMTER KONZENTRATIONEN GASFÖRMIGER STOFFE SOWIE ZUM MISCHEN VERSCHIEDENER GASFÖRMIGER STOFFE IN EINEM VORGEGEBENEN VERHÄLTNIS.**

(30) Priorität: **15.05.87 DE 3716289**

(43) Veröffentlichungstag der Anmeldung:
**10.05.89 Patentblatt 89/19**

(45) Bekanntmachung des Hinweises auf die
Patenterteilung:
**03.02.93 Patentblatt 93/05**

(84) Benannte Vertragsstaaten:
**CH DE FR GB IT LI NL SE**

(56) Entgegenhaltungen:
**FR-A- 2 333 292**   **GB-A- 2 047 553**
**US-A- 3 145 877**   **US-A- 3 626 963**
**US-A- 4 062 373**   **US-A- 4 162 689**
**US-A- 4 392 514**

(73) Patentinhaber: **Rosemount GmbH & Co.**
**Wilhelm-Rohn-Strasse 51**
**W-6450 Hanau 1(DE)**

(72) Erfinder: **WIEGLEB, Gerhard**
**Spielbergweg 69**
**W-5974 Herscheid(DE)**
Erfinder: **RANDOW, Albert**
**Paul-Gerhardt-Strasse 9**
**W-6454 Bruchköbel(DE)**

(74) Vertreter: **Haar, Lucas H., Dipl.-Ing. Patentanwalt**
**Königsberger Strasse 23**
**W-6360 Friedberg/Hessen 1(DE)**

EP 0 314 731 B1

## Beschreibung

Einrichtung für die Herstellung bestimmter Konzentrationen gasförmiger Stoffe sowie zum Mischen verschiedener gasförmiger Stoffe in einem vorgegebenen Verhältnis, wobei die gasförmigen Stoffe aus verschiedenen Quellen mittels eines Ventils impulsweise wenigstens einem gemeinsamen Ausgang zugeführt werden, der in ein Gefäß zur Aufnahme und Mischung der Gase mündet.

In vielen Fällen ist es erforderlich, Gasgemische in beliebiger Zusammensetzung und Konzentration herzustellen. Beispielsweise müssen die für die Messung von Luftverunreinigungen eingesetzten Geräte kalibriert werden, was eine besondere Sorgfalt erfordert. Da im Falle automatisch arbeitender Immissionsmeßstationen sehr kleine Meßbereiche zu kalibrieren sind, für die in den meisten Fällen keine in Flaschen verdichteten Prüfgase herstellbar sind, werden fast immer dynamische Herstellverfahren für Prüfgase angewandt. Um auch in diesen Fällen eine Versorgung mit genauen und zuverlässigen Prüfgasgemischen zu gewährleisten, werden Gasmischgeräte benötigt, mit denen auch Kalibrierungen unter 1 ppm mit großer Präzision möglich sind.

Für die Regelung der Temperatur von Wasser in Motor-Kühlkreislaufwärmetauschern ist es bereits bekannt, ein mittels Relais steuerbares Magnetventil zu verwenden (DE-AS 20 40 431). Dieses Magnetventil steuert einen Stellantrieb, der seinerseits ein Trennorgan steuert. Bei dem Trennorgan handelt es sich hierbei um ein Kurvenscheibenventil, das diagonal zwischen zwei benachbarten Armen eines Kreuz-Formstücks bewegbar ist und mehrere Wege freigeben oder verschließen kann.

Ein ähnliches Ventil, das zwei Auslässe und einen Einlaß hat, ist aus der DE-OS 21 26 485 bekannt. Auch hier dient das Ventil dazu, die Temperatur einer Flüssigkeit zu regeln.

Bei einer bekannten Anordnung zum gesteuerten Dosieren von zwei oder mehr Gasen, die über getrennte Leitungen mit Quellen für die in einem vorgegebenen Mischungsverhältnis zu mischenden Gase verbunden sind, werden schnelle und elektrisch gesteuerte Schaltventile in den getrennten Leitungen in einem eingestellten Zeitraster getaktet (DE-AS 28 31 856).

Die Gase werden hierbei pulsweise zugeführt, wobei entweder die Breite der einzelnen Gaspulse oder die Zahl der Pulse pro Zeiteinheit variiert wird. Über die Art der Überdruckerzeugung, die für das Strömen der Gase notwendig ist, ist nichts ausgesagt.

Bei einem anderen bekannten Verfahren zum Mischen von Gasen in einem vorgegebenen Verhältnis werden die Gase impulsweise einem Raum zum Mischen zugeführt (EP-A1 0 065 271). Die Impulsvolumina für die verschiedenen Gase verhalten sich dabei zueinander wie die gewünschten Verhältnisse zwischen den Gasen in der Mischung. Für den Gasfluß sorgen besondere Druckgasquellen.

Schließlich ist auch noch eine Gasmischvorrichtung mit einstellbaren Gasmischanteilen der über Komponentenzuleitungen zugeführten Gase bekannt, bei der der Anteil einer Gaskomponente durch eine Drosselstelle mit konstantem Vor- und Hinterdruck nach der Zeitdauer der Gasströmung bestimmt ist (DE-OS 31 35 455). Um die Meßgenauigkeit zu verbessern, ist in der Zuleitung zu einem Pufferbehälter eine für die Komponenten gemeinsame Drosselstelle angeordnet, wobei die Drosselstelle über ein steuerbares Mehrwegventil abwechselnd mit den einzelnen Komponentenzuleitungen verbindbar ist. Dem Pufferbehälter ist ein Druckregulierventil nachgeschaltet, das mit einer Entnahmeleitung für das Gasgemisch in Verbindung steht. Der Druck, der zum Strömen des Gases notwendig ist, wird durch vorgeschaltete Druckpumpen erzeugt.

Bei einer bekannten Vorrichtung zur Mischung von Flüssigkeiten (US-A-3 145 877) ist dem Ausgang einer mehrere Zahnradpumpen aufweisenden Dosiereinrichtung eine Verteilerpumpe nachgeschaltet, deren Förderstrom einen Hydromotor zum Antrieb der Zahnradpumpen beaufschlagt. Die Verteilerpumpe weist einen ein Druckentlastungsventil enthaltenden Bypass auf, durch den ein überschüssiges Fördervolumen auf die Saugseite des Pumpenrotors gelangen kann. Für eine Mischung verschiedener Gase mittels eines impulsweise gesteuerten Ventils ist eine solche Anordnung nicht geeignet.

Der Erfindung liegt die Aufgabe zugrunde, eine Einrichtung für die Herstellung bestimmter Gaskonzentrationen sowie zum Mischen verschiedener gasförmiger Stoffe zu schaffen, bei der die gasartbedingten Leistungsschwankungen einer Gaspumpe keinen Einfluß auf die Arbeitsgenauigkeit haben.

Die Aufgabe wird erfindungsgemäß dadurch gelöst, daß dem gemeinsamen Ausgang stromab des Gefäßes eine Gaspumpe nachgeschaltet ist und daß zur Herstellung gleicher Drücke an die Eingänge des Ventils jeweils ein Abströmgefäß oder miteinander verbundene Abluftleitungen angeschlossen sind.

Der mit der Erfindung erzielte Vorteil besteht insbesondere darin, daß eine kontinuierliche Förderleistung der Pumpe und damit eine hohe Kalibriergenauigkeit erzielt wird.

Ausführungsbeispiele der Erfindung sind in der Zeichnung dargestellt und werden im folgenden näher beschrieben. Es zeigen

Figur 1     eine erste Ausführungsform der Erfindung unter Verwendung von Abströmgefäßen

Fig. 2 eine zweite Ausführungsform der Erfindung unter Verwendung von Durchflußreglern.

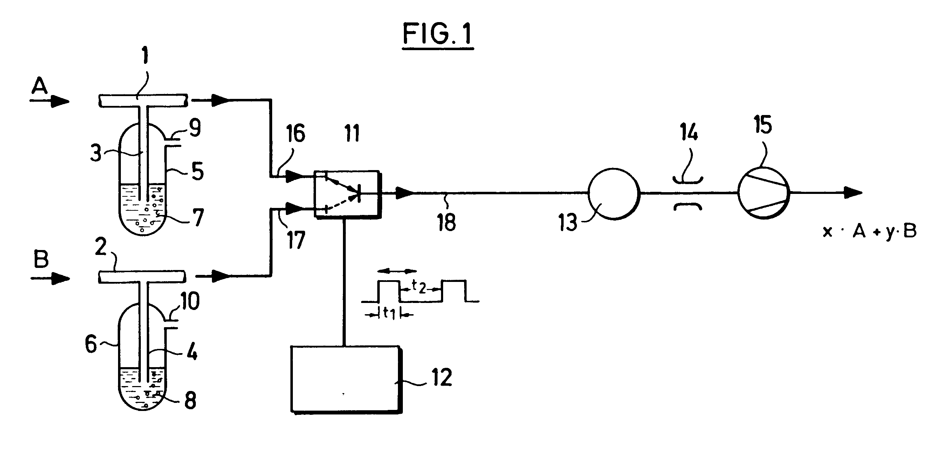

Dieses Prinzip der Erfindung wird in Fig. 1 anhand der Mischung zweier Gaskomponenten A und B erläutert, die jeweils aus nicht dargestellten Behältern in eine Rohrleitung 1 bzw. 2 gegeben werden. Diese Rohrleitungen 1, 2 besitzen Abzweigungen 3, 4, die in jeweils einem Abströmungsgefäß 5, 6 münden, das wenigstens teilweise mit einer Flüssigkeit 7, 8 gefüllt ist. Die Enden der Abzweigungen 3, 4 sind hierbei in die jeweilige Flüssigkeit 7, 8 eingetaucht. Im oberen Bereich der Abströmungsgefäße 5, 6 sind stutzenförmige Öffnungen 9, 10 vorgesehen, durch welche Gase abströmen können.

Die Gase A und B werden, nachdem sie die jeweiligen Abströmungsgefäße 5, 6 durchlaufen haben, einem Magnetventil 11 zugeführt, das auch als Chopper-Ventil bezeichnet werden kann. Die Steuerung dieses Magnetventils 11 erfolgt über einen Mikroprozessor 12, der so programmiert ist, daß er dem Magnetventil 11 pulsbreitenmodulierte Impulse zuführt. Das aus dem Magnetventil 11 abströmende Gas bzw. die abströmende Gasmischung wird einem Behälter 13 zugeführt, der als Puffer dient. Nachdem das Gas bzw. die Gasmischung den Behälter 13 durchlaufen hat, wird es über eine Drossel 14 einer Gaspumpe 15 zugeführt, deren Ausgang mit einem nicht dargestellten Gasanalysator in Verbindung steht.

Die in der Fig. 1 dargestellte Einrichtung stellt eine Art Gasmodulator dar, der mit Hilfe des Magnetventils 11 zwischen den Gaskomponenten A und B umschaltet. Die Öffnungszeiten für die jeweiligen Gaskomponenten werden hierbei von dem Mikroprozessor 12 festgelegt, der breitenmodulierte Impulse auf das Magnetventil 11 gibt. Die einzelnen Gasströme werden dann in dem Behälter 13 durchmischt und von der Gaspumpe 15, die beispielsweise eine einfache Membranpumpe ist, in den nicht dargestellten Gasanalysator gefördert.

Der Behälter 13 und die Drossel 14 müssen vor der Gaspumpe 15 angeordnet sein, weil die Förderleistung der Gaspumpe 15 gasartenabhängig ist.

Würde die Gaspumpe 15 vor dem Behälter 13 und vor der Drossel 14 angeordnet, so würde sie mit dem noch nicht durchmischten Gas beaufschlagt und hätte folglich eine nicht-kontinuierliche Förderleistung. Durch die Nachschaltung der Gaspumpe 15 werden diese Leistungsschwankungen eliminiert, so daß sie nicht in die Kalibriergenauigkeit eingehen.

Im folgenden wird beschrieben, wie sich mit Hilfe der erfindungsgemäßen Einrichtung eine bestimmte Gaskonzentration festlegen läßt. Hierzu

seien

$\dot{V}$ die Gasförderleistung der Gaspumpe 15 in Liter/Minute

$t_1$ die Öffnungszeit des Magnetventils 11 für ein Meßgas A

$t_2$ die Öffnungszeit des Magnetventils 11 für ein Meßgas B

$c$ die Gaskonzentration hinter dem Gefäß 13

Für diese Gaskonzentration des Meßgases A gilt dann

$$c\ (\%) = \frac{\dot{V} \cdot t_1}{\dot{V} \cdot t_1 + \dot{V} \cdot t_2} \cdot 100\ \%$$

Da sowohl im Zähler als auch in allen Elementen des Nenners des Bruches die Gasförderleistung $\dot{V}$ auftritt, kürzt sich diese heraus und man erhält

$$c\ (\%) = \frac{t_1}{t_1 + t_2} \cdot 100\ \%$$

Hieraus ergibt sich, daß die eingestellte Gaskonzentration von der Förderleistung der Pumpe unabhängig ist.

Da sich das Verhältnis $t_1/t_2$ nahezu beliebig einstellen läßt, gilt dies auch für das Verhältnis $t_1/t_2 + t_2$ und damit auch für die Gaskonzentration c.

Wird $t_1$ sehr groß und $t_2$ sehr klein gewählt, so ist die Gaskonzentration nahezu 100 %. Ist dagegen $t_2$ im Vergleich zu $t_1$ sehr groß, so geht die Gaskonzentration gegen 0 %. Durch die Vorgabe bestimmter Verhältnisse von $t_1$ und $t_2$ mittels eines Mikroprozessors oder dergleichen läßt sich auch jeder beliebige Abgleichzyklus oder Kalibrierablauf einstellen. Es müssen hierfür lediglich die jeweiligen Kennlinien aufgenommen werden. Eine Automatisierung der Kalibrierung ist somit auf einfache Weise möglich.

Magnetventile, die als erfindungsgemäße Chopper-Ventile eingesetzt werden können, sind bereits bekannt. Man unterscheidet hierbei vorgesteuerte Mehrwegemagnetventile, fremdgesteuerte Ventile, direktwirkende Ventile etc. (vgl. Magnetventil-Prospekt der Fa. Bürkert). Auf die Wirkungsweise dieser Ventile muß deshalb nicht näher eingegangen werden.

Anstelle von Magnetventilen können auch Piezoventile verwendet werden. Hierbei werden die impulsbreitenmodulierten Impulse auf ein Piezoelement gegeben, das diese Impulse beispielsweise in eine Membranbewegung umwandelt. Diese Membranbewegung kann sodann über Hebeleinrichtungen verstärkt und zum Öffnen und Schließen von Toren oder dergleichen verwendet werden.

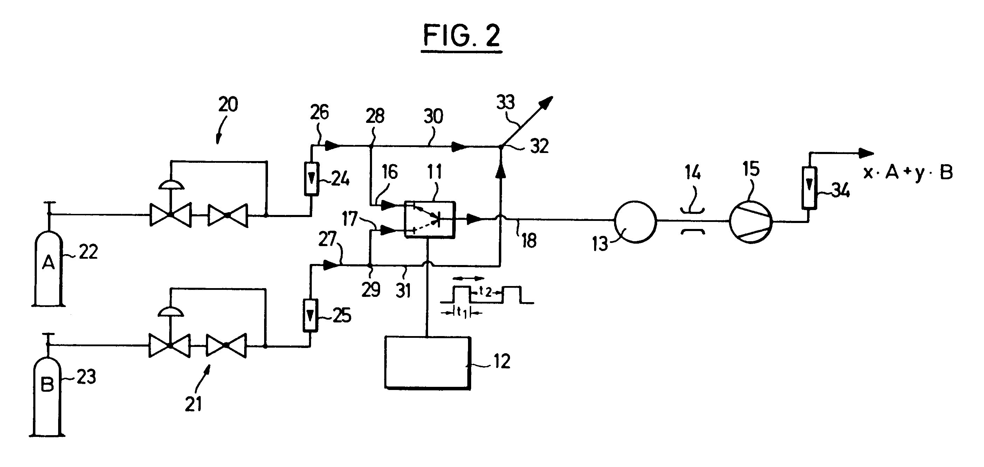

In der Fig. 2 ist eine weitere Ausführungsform der Erfindung dargestellt. Bei dieser Ausführungsform sind keine Abströmgefäße, sondern Durchflußregler 20, 21 vorgesehen, denen aus Gasbehältern 22, 23 das Meßgas A bzw. das Nullgas B zugeführt wird. Diesen Durchflußreglern 20, 21 sind Durchflußmesser 24, 25 nachgeschaltet, die beispielsweise auf dem Schwebekörper-Prinzip beruhen. Die Ausgangsleitungen 26, 27 dieser Durchflußmesser 24, 25 sind mit jeweils einem T-Stück 28, 29 verbunden, das zur Aufteilung des Gasstroms dient. Um an den Aufteilungsstellen gleiche Druckverhältnisse der beiden Gase A, B herzustellen, werden die abführenden Leitungen 30, 31 der T-Stücke 28, 29 im Punkt 32 miteinander verbunden, wo auch ein Abluftrohr 33 angeschlossen ist. An diesem Punkt 32 findet ein Druckausgleich statt. Die senkrecht auf den Leitungen 26, 30 bzw. 27, 31 stehenden Schenkel der T-Stücke 28, 29 werden dem Chopper-Ventil 11 zugeführt. Die weitere Anordnung gemäß Fig. 2 entspricht derjenigen von Fig. 1, wobei lediglich hinter der Pumpe 15 noch ein zusätzlicher Durchflußmesser 34 vorgesehen ist, der eine Mischung xA + yB zweier Gase an ein Analysegerät oder dergleichen weitergibt.

Die Anwendung der Erfindung ist nicht auf gasförmige Stoffe beschränkt; vielmehr kann die Erfindung auch zum Mischen anderer strömungsfähiger Substanzen verwendet werden.

**Patentansprüche**

1. Einrichtung für die Herstellung bestimmter Konzentrationen gasförmiger Stoffe sowie zum Mischen verschiedener gasförmiger Stoffe in einem vorgegebenen Verhältnis, wobei die gasförmigen Stoffe aus verschiedenen Quellen mittels eines Ventils (11) impulsweise wenigstens einem gemeinsamen Ausgang (18) zugeführt werden, der in ein Gefäß (13) zur Aufnahme und Mischung der Gase mündet, **dadurch gekennzeichnet,** daß dem gemeinsamen Ausgang (18) stromab des Gefäßes (13) eine Gaspumpe (15) nachgeschaltet ist und daß zur Herstellung gleicher Drücke an die Eingänge (16, 17) des Ventils (11) jeweils ein Abströmgefäß (5, 6) oder miteinander verbundene Abluftleitungen (30, 31, 33) angeschlossen sind.

2. Einrichtung nach Anspruch 1, dadurch gekennzeichnet, daß zwischen der Gaspumpe (15) und dem Gefäß (13) für die Aufnahme der Gase eine Gasdrossel (14) vorgesehen ist.

3. Einrichtung nach einem der Ansprüche 1 oder 2, dadurch gekennzeichnet, daß das Ventil (11) ein Magnetventil ist.

4. Einrichtung nach Anspruch 3, dadurch gekennzeichnet, daß das Ventil (11) ein 3/2-Wege-Magnetventil ist.

5. Einrichtung nach einem der vorhergehenden Ansprüche, dadurch gekennzeichnet, daß das Ventil (11) durch pulsbreitenmodulierte Impulse gesteuert wird.

6. Einrichtung nach Anspruch 1, dadurch gekennzeichnet, daß die Gaspumpe (15) mit einer Verarbeitungsvorrichtung, beispielsweise einem Gasanalysegerät, in Verbindung steht.

7. Einrichtung nach Anspruch 1, dadurch gekennzeichnet, daß das Ventil (11) ein Piezoventil ist.

8. Einrichtung nach Anspruch 1, dadurch gekennzeichnet, daß ein erstes Gas (A) über einen ersten Durchflußregler (20) einem Ventil (11) zugeführt ist und daß ein zweites Gas (B) über einen zweiten Durchflußregler (21) diesem Ventil (11) zugeführt ist.

9. Einrichtung nach Anspruch 8, dadurch gekennzeichnet, daß dem ersten und dem zweiten Durchflußregler (20, 21) jeweils ein Durchflußmesser (24 bzw. 25) nachgeschaltet ist.

10. Einrichtung nach Anspruch 9, dadurch gekennzeichnet, daß die Ausgänge (26, 27) der Durchflußmesser (24, 25) in einem Punkt (32) miteinander verbunden sind.

**Claims**

1. An arrangement for producing precise concentrations of gaseous substances and for mixing various gaseous substances in a predetermined ratio, in which the gaseous substances are supplied from various sources by means of a valve (11) in a pulsed manner at least to one common outlet (18) which opens out into a vessel (13) to receive and mix the gases, characterised in that a gas pump (15) is arranged after the common outlet (18) downstream of the vessel (13) and that, for the production of identical pressures , an outflow vessel (5,6) or exhaust air lines (30,31,33), connected with each other, are connected in each case to the inlets (16, 17) of the valve (11).

2. An arrangement according to Claim 1, characterised in that, between the gas pump (15) and the vessel (13) for receiving the gases, a gas throttle (14) is provided.

3. An arrangement according to one of Claims 1 or 2, characterised in that the valve (11) is a solenoid valve.

4. An arrangement according to Claim 3, characterised in that the valve (11) is a 3/2-way solenoid valve.

5. An arrangement according to one of the preceding claims, characterised in that the valve (11) is controlled by pulse width -modulated pulses.

6. An arrangement according to Claim 1, characterised in that the gas pump (15) communicates with a processing device, for example a gas analysis instrument.

7. An arrangement according to Claim 1, characterised in that the valve (11) is a piezo valve.

8. An arrangement according to Claim 1, characterised in that a first gas (A) is supplied via a first through -flow regulator (20) to a valve (11) and that a second gas (B) is supplied via a second through-flow regulator (21) to this valve (11).

9. An arrangement according to Claim 8, characterised in that a through -flow meter (24 or , respectively, 25) is arranged after the first and the second through -flow regulator (20,21).

10. An arrangement according to Claim 9, characterised in that the outlets (26,27) of the through-flow meters (24, 25) are connected with each other at a point (32).

**Revendications**

1. Dispositif pour produire des concentrations déterminées de substances gazeuses ainsi que pour le mélange de différences substances gazeuses dans un rapport prédéterminé, les substances gazeuses étant envoyées de façon impulsionnelle à partir de différentes sources au moyen d'une vanne (11), à une sortie commune (18), qui débouche dans un récipient (13) servant à recevoir et mélanger les gaz, caractérisé en ce qu'une pompe à gaz (15) est montée en aval de la sortie commune (18) et en aval du récipient (13) et en ce que, pour l'obtention de pressions identiques au niveau des entrées (16 et 17) de la vanne (11), à ces entrées sont raccordés respectivement des récipients d'écoulement (5,6) ou des canalisations d'aération (30,31,33) raccordées entre elles.

2. Dispositif selon la revendication 1, caractérisé en ce qu'un dispositif d'étranglement pour gaz (14) est prévu entre la pompe à gaz (15) et le récipient (13) pour la réception des gaz.

3. Dispositif selon l'une des revendications 1 ou 2, caractérisé en ce que la vanne (11) est une électrovanne.

4. Dispositif selon la revendication 3, caractérisé en ce que la vanne (11) est une électrovanne à 3/2 voies.

5. Dispositif selon l'une des revendications précédentes, caractérisé en ce que la vanne (11) est commandée par des impulsions modulées en durée.

6. Dispositif selon la revendication 1, caractérisé en ce que la pompe à gaz (15) est raccordée à un dispositif de traitement, par exemple un analyseur de gaz.

7. Dispositif selon la revendication 1, caractérisé en ce que la vanne (11) est une soupape piézoélectrique.

8. Dispositif selon la revendication 1, caractérisé en ce qu'un premier gaz (A) est envoyé par l'intermédiaire d'un premier régulateur de débit (20) à une vanne (11) et qu'un second gaz (B) est envoyé par l'intermédiaire d'un second régulateur de débit (21) à cette vanne (11).

9. Dispositif selon la revendication 8, caractérisé en ce que des débitmètres (24 et 25) sont branchés respectivement en aval des premier et second régulateurs de débit (20,21).

10. Dispositif selon la revendication 9, caractérisé en ce que les sorties (26,27) des débitmètres (24,25) sont raccordées entre elles en un point (32).

FIG.1

FIG. 2